# EUROPEAN PATENT SPECIFICATION

(11) **EP 0 368 454 B1**
(45) Date of publication and mention of the grant of the patent: **16.02.1994**
(21) Application number: 89309364.1
(22) Date of filing: 14.09.1989
(51) Int. Cl.: G01F 1/32

(54) **Controlling fibre optic vortex shedding flowmeters**
Steuerung für fiberoptische Wirbelströmungsmesser
Commande pour débitmètres à tourbillon à fibres optiques

(30) Priority: 07.11.1988 US 267896
(43) Date of publication of application: 16.05.1990
(73) Proprietor: INTERNATIONAL CONTROL AUTOMATION FINANCE S.A., Ville de Luxembourg (LU)
(72) Inventor: Jordan, David William, Euclid Ohio 44132 (US); Thompson, William Lee, Montville Ohio 44064 (US)
(74) Representative: Cotter, Ivan John

(56) References cited:
- GB-A- 2 135 446
- US-A- 4 390 956
- US-A- 4 589 279
- US-A- 4 648 280

## Description

This invention relates to the control of fibre optic vortex shedding flowmeters.

A fibre optic sensor unit can be used in a vortex shedding flowmeter. In such a flowmeter, a sensor beam is exposed to a flow of fluid that has fluid vortices generated therein by an obstruction in the flow path. The frequency of the fluid vortex generation (called shedding) is a measure of the flow rate for the fluid. Each time a vortex is shed, the sensor beam is moved. This movement is transferred to one of the many known assemblies used for changing the characteristics of light transmitted and received through a fibre optic cable. Such assemblies include microbend jaws which bend the optical fibre or cable, modulating the light intensity therein, and divided optical fibre assemblies having one of the fibre ends moving in response to the sensor beam, eliminating a portion of the light travelling through the fibre.

It is well known in the art to provide a control system in order to control a vortex shedding flowmeter. A conversion unit must be provided as part of the control system to convert the light signals transmitted through the fibre optic cables into an electrical signal that is compatible with the control system. A communication path must also be provided as part of the control system to transmit the converted electrical signals to a central control unit.

One known and industrially accepted system for conveying signals from a transducer, such as a flowmeter, to a central control unit is a two wire, 4-20 ma analogue transmission system. It is known in the art to use a two wire, 4-20 ma transmission system for fibre optic vortex shedding flowmeters, as is disclosed in US Patent No. US-A-4 656 353 (Thompson). Further prior art is disclosed in GB-A-2 135 446; EP-A-0 165 697; US-A-4 589 279; US-A-4 390 956; EP-A-0 187 407; EP-A-0 232 007; and EP-A-0 234 680.

In the analogue transmission system the modulated light intensity in the optical cable is converted to an analogue current or voltage proportional to the flow indicated by the sensor beam. These analogue transmission systems are limited in vortex shedding flowmeter applications. The vortices shed are a non-linear quantity, and non-linear signals limit the range of accurate flow signals that can be transmitted on a 4-20 ma path. These are also hysteresis and thermal drift effects in the analogue circuitry that limit the repeatability, and therefore the accuracy, of the vortex shedding flowmeter signal that is transmitted through a 4-20 ma path. An analogue transmission path cannot provide control signal communication between the flowmeter and a control unit; it can only provide one way communication by transmitting the flow as sensed by the flowmeter to the central control unit. No control signals can be sent from the central control unit to the flowmeter.

The conversion units used in fibre optic vortex shedding flowmeter control systems have also limited the range of vortex shedding flowmeters. Preamplifier (preamp) circuits used in present conversion units, such as disclosed in US-A-4 628 197 (Thompson), are not able to sense low-end signals generated by a vortex shedding flowmeter. Thus, a digital control system for a fibre optic vortex shedding flowmeter is needed which makes adjustments for the non-linearity of the vortex shedding phenomenon and corrects or eliminates thermal effects and hysteresis. It has become desirable to provide two-way digital communication between the fibre optic vortex shedding flowmeter and a control unit while also improving the low end sensitivity of the conversion circuitry used in fibre optic vortex shedding flowmeters.

According to the invention there is provided a control system for a fibre optic vortex shedding flowmeter, the flowmeter being operable to measure a flow variable in a fluid under test, the system comprising:
light emitting means;
light detecting means;
light connecting means for transmitting light from the light emitting means to the light detecting means, the light connecting means being operable to vary the attenuation of light transmitted from the light emitting means to the light detecting means in response to vortex shedding in the fluid; and
means for generating an electrical signal dependent upon said varied attenuation of light;
characterised by
means arranged to compare said electrical signal with two predetermined different reference levels, thereby to generate two rectangular temporally offset output signals, which are 180° out of phase with one another; and
computer means responsive to said output signals for determining said flow variable therefrom, and for correcting said flow variable in accordance with predetermined factors.

A preferred embodiment of the invention described in detail below overcomes or at least alleviates all of the above-described problems associated with control systems for fibre optic vortex shedding flowmeters. This is accomplished by providing a new and improved preamplifier circuit and a digital computer for correcting temperature, linearity and hysteresis effects. The preferred digital control system is not affected by the non-linearity of the vortex shedding phenomena, corrects hysteresis and thermal drift effects, transmits and receives control signals from the vortex shedding flowmeter, and increases the low end range of vortex shedding flowmeters.

The invention will now be further described, by way of illustrative and non-limiting example, with reference to the accompanying drawings, in which:
Figure 1 is a block diagram of a control system according to a preferred embodiment of the invention;
Figure 2 is a schematic diagram showing a circuit for optical to electrical conversion;
Figure 3 is a graph showing the output of a preamplifier circuit;
Figure 4 is a schematic diagram showing a filter circuit; and
Figure 5 is a graph showing an output of the filter circuit.

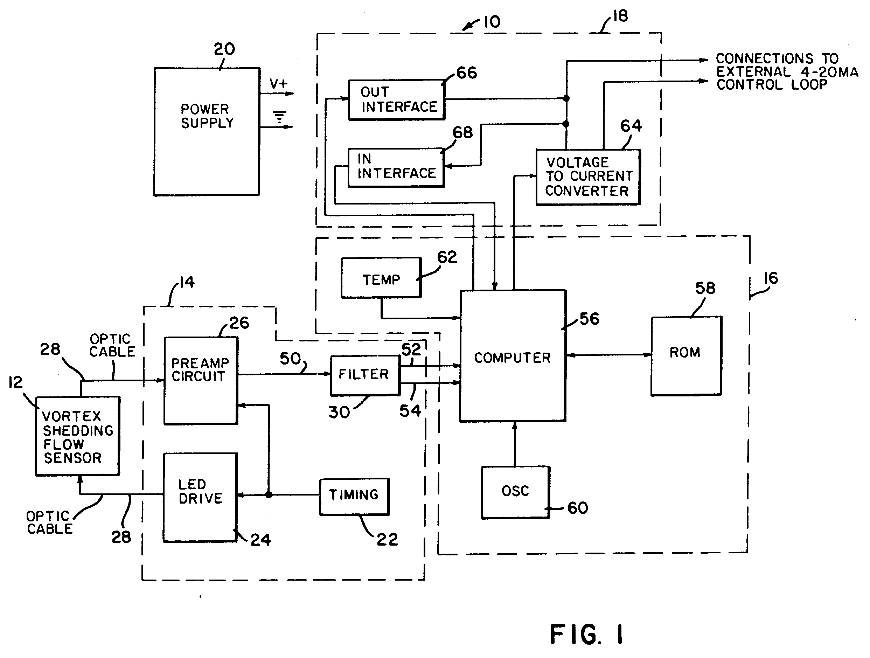

Figure 1 shows a digital control system 10 for a fibre optic vortex shedding flowmeter. The illustrated arrangement comprises a fibre optic vortex shedding flow sensor 12, a conversion unit 14, a central control unit 16, a digital communications unit 18, and a power supply 20.

The conversion unit 14 includes a timing circuit 22 connected to a light emitting diode (LED) drive circuit 24 and a preamplifier (preamp) circuit 26. The LED drive circuit 24 is connected by a fibre optic cable 28 through the vortex shedding flow sensor 12 to the preamp circuit 26. The preamp circuit 26 is connected by a line 50 to a filter circuit 30 which is connected over lines 52 and 54 to the central control unit 16.

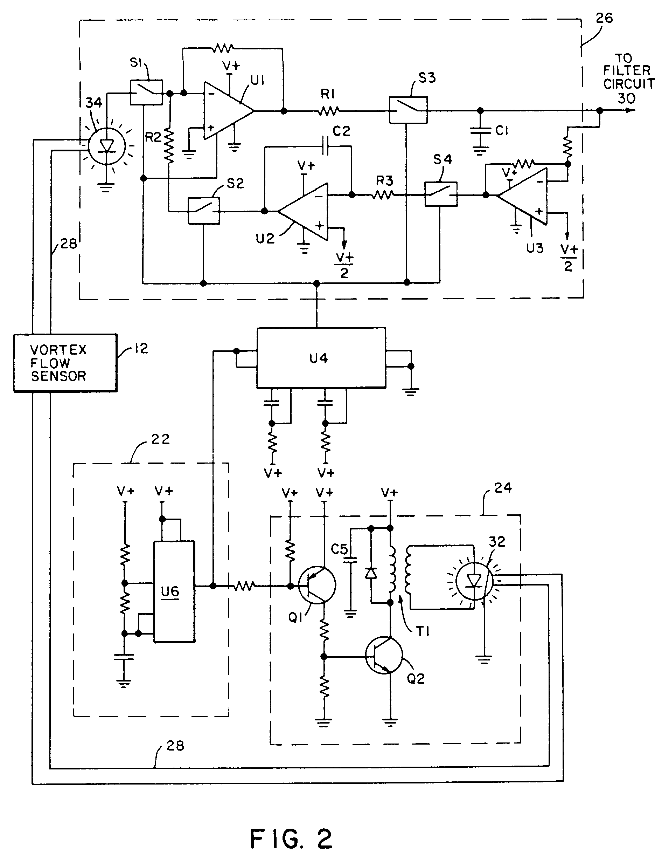

Figure 2 is a schematic diagram of the timing circuit 22, LED drive circuit 24 and preamp circuit 26. In operation, current to an LED 32 is supplied as a series of pulses, typically having a duty cycle of 1 percent, an amplitude of 100 to 200 ma and a repetition rate or frequency of about 800 Hz. An oscillator U6, typically a low power CMOS version of a 555 timer, such as a 7555 timer, is used to generate a control signal for the current passing through the LED 32. Transistors Q1 and Q2 amplify the output of the 7555 timer. A transformer T1 serves to match the drive requirements of 1.5 volts for the LED 32 to the circuit's higher drive voltage of typically 6 to 10 volts. The transformer T1 is typically a pulse transformer with a 4:1 turns ratio. A capacitor C5 serves to isolate the high pulses of current from creating voltage pulses on the power supply 20 for the rest of the drive circuit 24 by storing charge in the capacitor C5 between the pulses for the LED 32. The current passing through the LED 32 primarily results from the charge stored in the capacitor C5.

The light pulses are transmitted through the fibre optic cable 28 and through the vortex shedding flow sensor 12 to a light detector 34 of the preamp circuit 26. Varying attenuation is effected by bending the fibre optic cable 28 or by changing the degree of light at a coupling within the fibre optic cable 28 so that the resulting variation in the amount of light is proportional to the fluid flow in the flowmeter 12. The light detector 34 converts the received light into an electrical signal, typically a current, and supplies it to the remainder of the preamp circuit 26 through a switch S1.

When the oscillator U6 generates the control signal for the LED 32 it also sends the same control signal to a one-shot multivibrator U4. The multivibrator U4 is triggered by the leading edge of the pulse being transmitted, energising the switch S1, further switches S2, S3 and S4, and an operational amplifier U1. Thus, the preamp circuit 26 is "turned on" when the LED 32 is pulsed.

The operational amplifier U1 converts the current pulses it receives (on an inverting input thereof) into voltage pulses. The operational amplifier U1 is energised to enter into a high speed, high power mode of operation thereof when the multivibrator U4 is energising the switches S1 to S4. This operational amplifier U1 then returns to a low speed, low power mode thereof until the next pulse to the LED 32 is received. Thus, the operational amplifier U1 is not drawing high power during periods when it is not necessary for the operation of the circuit. During the off period, the operational amplifier U1 has its input connections switched into a voltage follower mode, which tends to hold its output voltage fairly constant until the next pulse. Thus, there is not a great change in voltage at the output stage when the next pulse is amplified.

A peak-following sample and hold function is performed by the combination of a capacitor C1, a resistor R1 and the switch S3 for remembering the output of the operational amplifier U1 until the next pulse to the LED 32. The time constant of this combination is determined by the values of the resistor R1 and capacitor C1 and the pulse duty cycle. The time constant must be fast enough to permit the largest sensor signal to pass.

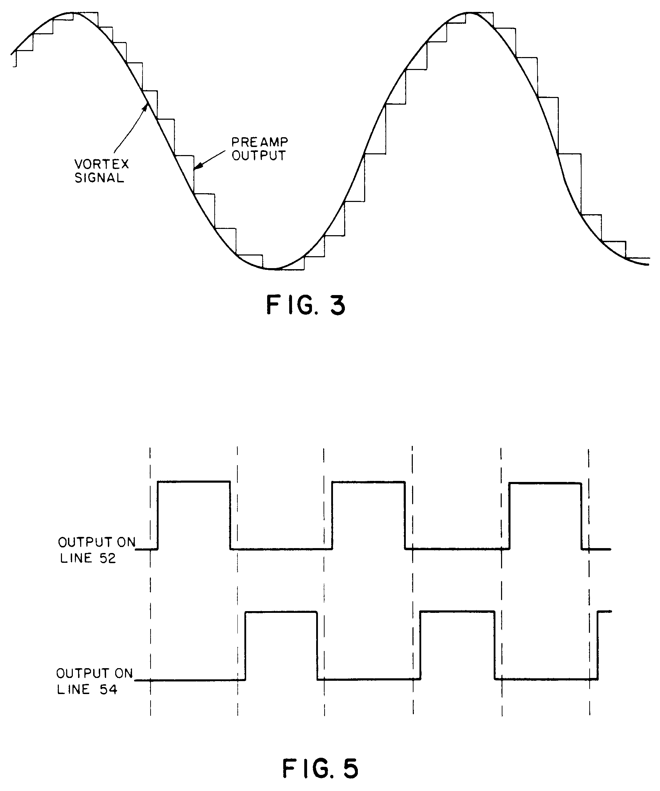

Operational amplifiers U2 and U3 provide a feedback loop for drawing a current through a resistor R2 that is equal to the average peak current of the pulses. This current is applied to the inverting input of the operational amplifier U1. In this manner, the average peak values of the signal from the light detector 34 are removed from the output of the operational amplifier U1. Because of this, the only amplified signals seen at the output of the operational amplifier U1 are the modulation from the average peak values of signals from the light detector 34 and these signals are the only signals that are needed to determine the flow through the flow sensor 12. Thus, all low end noise is blocked out. The time constant of this loop is long enough so that the lowest frequency desired is allowed to pass but lower frequencies or noise are cancelled by the feedback loop. A resistor R3, a capacitor C2, and the pulse duty cycle determine this time constant. Figure 3 shows a typical output signal sent to the filter circuit 30.

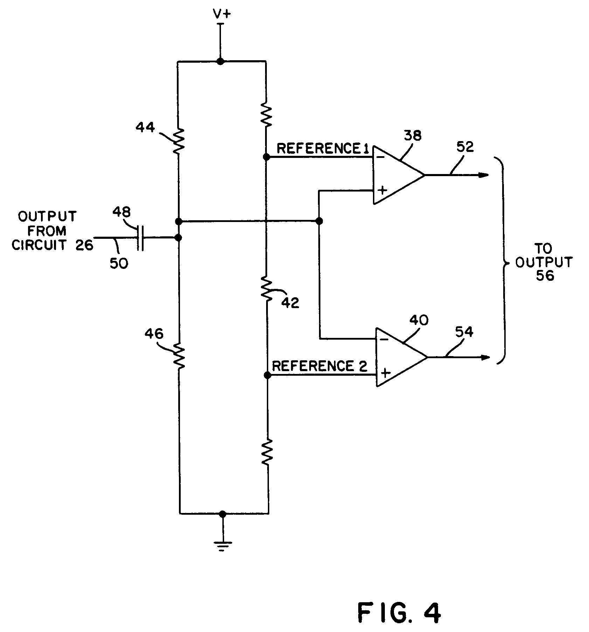

Figure 4 is a schematic diagram of the filter circuit 30, which comprises comparators 38 and 40. The comparators 38 and 40 are typically operational amplifiers and are of opposite polarities and have reference voltages (references levels 1 and 2) applied thereto. These voltages are of different magnitude as determined by a small voltage across a resistor 42. The reference voltages are equidistant from signal common (typically, one-half of V+). Resistors 44 and 46 and a capacitor 48 form a high pass filter that allows all expected signals on the line 50 from the preamp circuit 26 to pass therethrough.

In operation, when a sine wave is applied to the two comparators 38 and 40, the respective outputs thereof are two rectangular wave voltages having a slightly less than 50% duty cycle and being 180 degrees out of phase, as shown in Figure 5. The output from the operational amplifier 38 on the line 52 is in the high state when its input from the preamp circuit 26 on the line 50 is above reference level 1, and the output from the operational amplifier 40 on the line 54 is in the high state when its input from the preamp circuit 26 on the line 50 is below reference level 2. The filter circuit 30 eliminates noise by generating a square wave that is unaffected by variations in the signal over or under the above-mentioned reference levels.

Referring again to Figure 1, the rectangular waves on the lines 52 and 54 are inputted to a computer 56 which is typically a microprocessor. The computer 56 has the ability to perform certain functions on the rising edge of a square wave, such as those which are transmitted on the lines 52 and 54. These functions are provided by software programs stored in an 8K byte read-only-memory (ROM) 58. One software program calculates the flow of the fluid in the flowmeter by determining the difference between the two output signals on the lines 52 and 54 and a preset timing oscillator 60. Other programs stored in the ROM 58 perform calculations on the input signals 52 and 54 to correct for non-linearity of the vortex shedding phenomena. Calculations can also be made to correct for temperature drift effects, as determined by an ambient temperature sensor 62. The reason that timing offset in the signals on the lines 52 and 54 is needed is to provide two different leading edges to commence the various software actions at different times, as required. Finally, after all corrections and calculations have been completed, the computer 56 sends an output pulse width to a voltage to current converter 64. The converter 64 regulates the 4-20 ma current loop according to the calculated values from the computer 56. The operation of the converter 64 is more fully described in US Patent No. US-A-4 604 566.

OUT and IN interfaces 66 and 68, respectively, allow digital communication between the computer 56 and a central control station (not shown). The interfaces 66 and 68 allow an operator to interrogate the flowmeter for variables such as flow rate, calibration, ambient temperature, and the mechanical performance of the flowmeter. The operator can then make any adjustments which are necessary. The OUT interface 66 is more fully described in US Patent No. US-A-4 607 247 and the IN interface 68 is more fully described in US Patent No. US-A-4 729 125.

## Claims

1. A control system for a fibre optic vortex shedding flowmeter, the flowmeter being operable to measure a flow variable in a fluid under test, the system comprising:
light emitting means (32);
light detecting means (34);
light connecting means (28) for transmitting light from the light emitting means (32) to the light detecting means (34), the light connecting means being operable to vary the attenuation of light transmitted from the light emitting means (32) to the light detecting means (34) in response to vortex shedding in the fluid; and
means (26) for generating an electrical signal dependent upon said varied attenuation of light;
characterised by
means (38, 40, 42) arranged to compare said electrical signal with two predetermined different reference levels, thereby to generate two rectangular temporally offset output signals, which are 180° out of phase with one another; and
computer means (56) responsive to said output signals for determining said flow variable therefrom, and for correcting said flow variable in accordance with predetermined factors.

2. A system according to claim 1, wherein the computer means (56) includes digital means (66, 68) for communicating to and from the flowmeter.

3. A system according to claim 1 or claim 2, wherein one said predetermined factor is non-linearity of the vortex shedding phenomenon, the computer means (56) being capable of calculating the non-linearity of the vortex shedding phenomenon and correcting said flow variable according thereto.

4. A system according to claim 1, claim 2 or claim 3, wherein one said predetermined factor is thermal drift, the system further comprising a temperature sensor (62) in communication with said computer means for thermal drift correction of said flow variable.

5. A system according to any one of the preceding claims, wherein the generating means (26) includes a feedback circuit (U2, U3) which eliminates an average peak value of said light attenuation whereby said electrical signal is dependent upon the modulation of said light attenuation.

## Patentansprüche

1. Steuereinrichtung für einen faseroptischen Wirbelablösungsströmungsmesser, wobei der Strömungsmesser so betreibbar ist, eine veränderliche Strömung in einer zu untersuchenden Flüssigkeit zu messen, und die Einrichtung aufweist:
Licht aussendende Einrichtungen (32);
Licht messende Einrichtungen (34);
Licht verbindende, bzw leitende Einrichtungen (28) zur Übertragung von Licht von den Licht aussendenden Einrichtungen (32) zu den Licht messenden Einrichtungen (34), wobei die Licht leitenden Einrichtungen so betreibbar sind, daß sie die Dämpfung des von den Licht aussendenden Einrichtungen (32) zu den Licht messenden Einrichtungen (34) übertragenen Lichts unter Ansprechen auf die Wirbelablösung in der Flüssigkeit variieren; und
Einrichtungen (26) zur Erzeugung eines elektrischen Signals, weiches von der variierenden Lichtdämpfung abhängt;
gekennzeichnet durch
Einrichtungen (38, 40, 42), die zusammengestellt sind, um das elektrische Signal mit zwei vorbestimmten verschiedenen Referenzpegeln zu vergleichen, um so zwei zeitlich versetzte Rechteckausgangssignale zu erzeugen, welche um 180 Grad zueinander phasenverschoben sind; und
Rechnereinrichtungen (56), welche auf die Ausgangssignale ansprechen, um daraus die Strömungsgröße zu bestimmen und die die Strömungsgröße in Übereinstimmung mit vorbestimmtem Faktoren korrigieren.

2. Einrichtung nach Patentanspruch 1, bei der die Rechnereinrichtung (56) digitale Einrichtungen (66, 68) zur Kommunikation zu und von dem Strömungsmesser aufweist.

3. Einrichtung nach Patentanspruch 1 oder 2, wobei einer der vorbestimmten Fahren bzw. Einflußgrößen die Nichtlinearität des Wirbelablösungssphänomens ist, und wobei die Rechnereinrichtung (56) in der Lage ist, die Nichtlinearität des Wirbelablösungssphänomens zu berechnen und die Strömungsgröße in Hinblick darauf zu korrigieren.

4. Einrichtung nach Patentanspruch 1, 2 oder 3, bei der einer der vorbestimmten Faktoren bzw. Einflußgrößen die thermische Drift ist, wobei die Einrichtung weiterhin einen Temperaturfühler aufweist (62), der in Kommunikation mit der Rechnereinrichtung steht, um die Strömungsgröße bzw.-Variable hinsichtlich einer thermischen Drift zu korrigieren.

5. Einrichtung nach einem der vorstehenden Patentansprüche, bei der die Erzeugungseinrichtung (26) einen Rückkopplungsschaltkreis (U2, U3) aufweist, welcher einen Durchschnittsspitzenwert der Lichtdämpfung beseitigt, wobei das elektrische Signal von der Modulation der besagten Lichtdämpfung abhängt.

## Revendications

1. Système de commande pour un débitmètre à fibres optiques à tourbillons emportés par le courant, le débitmètre servant à mesurer une variable de débit dans un fluide à mesurer, le système comprenant :
un moyen émetteur de lumière (32) ;
un moyen détecteur de lumière (34) ;
un moyen de liaison lumineuse (28) pour transmettre la lumière du moyen émetteur de lumière (32) au moyen détecteur de lumière (34), le moyen de liaison lumineuse servant à faire varier l'atténuation de la lumière transmise du moyen émetteur de lumière (32) au moyen détecteur de lumière (34) en réponse à un détachement de tourbillon dans le fluide ; et,
un moyen générateur (26) d'un signal électrique fonction de ladite atténuation de lumière variable ;
caractérisé par :
un moyen (38, 40, 42) agencé pour comparer ledit signal électrique avec deux niveaux de référence différents prédéterminés, pour produire ainsi deux signaux de sortie rectangulaires décalés dans le temps, qui sont déphasés de 180° l'un par rapport à l'autre ; et,
un moyen calculateur (56) sensible auxdits signaux de sortie pour déterminer à partir de là ladite variable de débit et pour corriger ladite variable de débit en fonction de facteurs prédéterminés.

2. Système selon la revendication 1, dans lequel le moyen calculateur (56) comprend un moyen numérique (66, 68) pour des transmissions vers le débitmètre et à partir de celui-ci.

3. Système selon la revendication 1 ou la revendication 2, dans lequel l'un desdits facteurs prédéterminés est la non-linéarité du phénomène de détachement de tourbillons, le moyen calculateur (56) étant capable de calculer la non-linéarité du phénomène de détachement de tourbillons et de corriger ladite variable de débit en fonction de cela.

4. Système selon la revendication 1, la revendication 2, ou la revendication 3, dans lequel l'un desdits facteurs prédéterminés est la dérive thermique, le système comprenant en outre un capteur de température (62) en communication avec ledit moyen calculateur pour la correction de dérive thermique de ladite variable de débit.

5. Système selon l'une quelconque des revendications précédentes, dans lequel le moyen générateur (26) comprend un circuit de contre-réaction (U2, U3) qui élimine une valeur moyenne de pic de ladite atténuation de lumière, ce par quoi ledit signal électrique est fonction de la modulation de ladite atténuation de lumière.
